# EUROPÄISCHE PATENTSCHRIFT

(11) **EP 2 494 488 B1**
(45) Veröffentlichungstag und Bekanntmachung des Hinweises auf die Patenterteilung: **24.04.2019**
(21) Anmeldenummer: 10775688.4
(22) Anmeldetag: 12.10.2010
(51) Int. Cl.: G06F 21/74

(54) **VERFAHREN ZUM AUSFÜHREN VON SICHERHEITS-RELEVANTEN UND NICHT-SICHERHEITS-RELEVANTEN SOFTWAREKOMPONENTEN AUF EINER HARDWAREPLATTFORM**
METHOD FOR EXECUTING SECURITY-RELEVANT AND NON-SECURITY-RELEVANT SOFTWARE COMPONENTS ON A HARDWARE PLATFORM
PROCÉDÉ POUR EXÉCUTER DES COMPOSANTS LOGICIELS LIÉS À LA SÉCURITÉ ET NON LIÉS À LA SÉCURITÉ SUR UNE PLATE-FORME MATÉRIELLE

(30) Priorität: 15.10.2009 AT 16272009
(43) Veröffentlichungstag der Anmeldung: 05.09.2012
(73) Patentinhaber: TTTech Computertechnik AG, 1040 Wien (AT)
(72) Erfinder: WEICH, Carsten, A-1230 Wien (AT); POLEDNA, Stefan, A-3400 Klosterneuburg (AT); SCHMIDT, Eric, A-2143 Großkrut (AT)
(74) Vertreter: Patentanwaltskanzlei Matschnig & Forsthuber OG
(86) Internationale Anmeldenummer: PCT/AT2010/000386
(87) Internationale Veröffentlichungsnummer: WO 2011/044603

(56) Entgegenhaltungen:
- EP-A1- 1 688 816
- WO-A1-00/42490
- WO-A2-2007/004219

## Beschreibung

Die Erfindung betrifft ein Verfahren zum Ausführen von sicherheits-relevanten und nicht-sicherheits-relevanten Softwarekomponenten auf einer Hardwareplattform, wobei die Hardwareplattform eine Recheneinheit und zumindest einen Speicher umfasst und wobei die zumindest eine nicht-sicherheits-relevante Softwarekomponente zusammen mit der zumindest einen sicherheits-relevanten Softwarekomponente auf dieser einen Recheneinheit ausgeführt werden, und wobei die Hardwareplattform eine Überwachungskomponente umfasst oder mit dieser verbunden ist, und wobei diese Überwachungskomponente unabhängig von dem zumindest einen Prozessor der Hardwareplattform arbeitet.

Weiters betrifft die Erfindung eine Hardwareplattform, auf welcher ein solches Verfahren durchgeführt wird.

Die Dokumente des Stands der Technik EP1688816-A1 und WO00/42490-A1 offenbaren Verfahren zum Isolierung von sicherheitsrelevante Softwarekomponenten und nicht sicherheitsrelevantes Softwarekomponente.

Computersysteme werden in zunehmendem Maß für Aufgaben eingesetzt, in denen falsche oder nicht rechtzeitige Reaktionen des Computersystems Menschenleben oder Sachen gefährden können ("sicherheits-relevante Systeme"). Solche Systeme müssen nach genormten Richtlinien entwickelt und getestet werden (IEC61508, ISO26262), um Fehler weitgehend auszuschließen. Die entsprechende Entwicklung solcher Systeme ist sehr aufwändig, langwierig und entsprechend teuer.

Auf der anderen Seite werden computerunterstützte Funktionen in immer mehr Bereichen eingesetzt. Oftmals besteht die Anforderung, eine Steuerung mit unkritischen "Standardfunktionen" um eine "sicherheits-relevante Funktion" zu erweitern. Beispiel: Die Funktion ACC (Tempomatfunktion, welche auf Geschwindigkeit des vorausfahrend Fahrzeugs regelt, ist eine unkritische (Komfort-)Funktion) soll auf automatisches Notbremsen erweitert werden (sicherheits-relevante Funktion).

Der gleichzeitige Ablauf von sicherheits-relevanten und unkritischen Funktionen in einem einzigen Steuergerät hat Kostenvorteile (weniger Steuergeräte, weniger Verkabelung, einfachere Wartung, ...). Es muss aber sichergestellt werden, dass Fehler in den unkritischen Funktionen nicht die sicherheits-relevanten Funktionen beeinträchtigen können. Der Stand der Technik bietet dafür spezielle Betriebssysteme an (ARINC 653, DECOS), die ein "Übergreifen" der unkritischen Funktionen auf sicherheitsrelevante Funktionen durch verschiedene Maßnahmen verhindern. Diese Betriebssysteme haben den Nachteil, dass sie sehr spezielle Anforderungen sowohl an die Steuergeräte-Hardware als auch an die Programmierung der Funktionen stellen, sodass die Integration von unkritischen Funktionen in derartige Systeme auch wiederum aufwändig und teuer ist.

Es ist eine Aufgabe der Erfindung, eine kostengünstige und trotzdem effektive Möglichkeit zu bieten, bestehende Steuergeräte und bestehende "Standardfunktionen" effizient um "Sicherheitsfunktionen" zu erweitern, um dadurch Entwicklungs- und Stückkosten zu sparen.

Diese Aufgabe wird mit einem eingangs erwähnten Verfahren bzw. einer eingangs erwähnten Hardwareplattform dadurch gelöst, dass erfindungsgemäß die Hardwareplattform über Schreibschutzmechanismen für zumindest einen Teil des zumindest einen Speichers verfügt, und wobei die sicherheits-relevante Softwarekomponente über vollen Schreibzugriff auf bestimmte Bereiche oder auf den gesamten Speicher verfügt, oder die sicherheits-relevante Softwarekomponente auf einen bestimmten Bereich des Speichers, welcher von einem für nicht-sicherheits-relevante Funktionen vorgesehenen Bereich des Speichers getrennt ist, Zugriff hat, und wobei die sicherheits-relevante Softwarekomponente vor der Ausführung der nicht-sicherheits-relevanten Softwarekomponente einen Speicherschutz gegen einen Zugriff einer nicht-sicherheits-relevanten Funktion auf zumindest einen Bereich des Speichers der sicherheits-relevanten Funktion errichtet, sodass die nicht-sicherheits-relevante Softwarekomponente nur in eingeschränkten Bereichen des Speichers über Schreibzugriff verfügt und insbesondere über keinen der für sicherheits-relevante Komponenten abgetrennten Bereiche des Speichers Zugriff hat, und wobei nach der Rückkehr aus der nicht-sicherheits-relevanten Komponente der Speicherschutz wieder heruntergefahren wird, und wobei die Überwachungskomponente die sicherheits-relevante Funktion auf ihren ordnungsgemäßen Ablauf hin überwacht.

"Rückkehr" aus der nicht-sicherheits-relevante Komponente bedeutet dabei, dass die sicherheits-relevante Komponente die nicht-sicherheits-relevante Komponente "startet", anschließend "nur" die nicht-sicherheits-relevante Komponente läuft, und wenn diese abgelaufen ist, wieder die sicherheits-relevante Komponente weiter läuft.

Die Erfindung bietet hier eine kostengünstigere Lösung als oben beschrieben an. Im Kern der Erfindung wird ein "optimistisches Verfahren" angewendet. Das heißt, es wird positiv angenommen, dass die unkritischen Funktionen keine Fehler verursachen. Ob diese Annahme stimmt, wird zuverlässig und sehr rasch überprüft. Der Übergriff (=Fehler einer unkritischen Funktion, welcher sich auf die sicherheits-relevante Funktion auswirken könnte) wird also zwar nicht verhindert, aber erkannt, sodass die sicherheits-relevante Funktion in einen sicheren Zustand gebracht werden kann (oder in einer anderen geeigneten Art auf die Störung reagiert wird).

Der sichere Zustand bedeutet normalerweise: "Abschaltung" - eine andere geeignete Art könnte sein, dass die fehlerhafte Funktion vor Ausführung des Übergriffs (z.B. Überschreiben eines Bereichs des Arbeitsspeichers, den die sicherheits-relevante Funktion benötigt) angehalten wird - ohne dass die sicherheits-relevante Funktion beeinträchtigt wird. Dies könnte durch eine Exception-Behandlungsroutine erfolgen.

Für die meisten Systeme ist die Vorgangsweise durchaus ausreichend, weil es in der Regel noch andere unzuverlässige Teile gibt und sicherheits-relevante Systeme immer auch bei Auftreten eines einzelnen Fehlers in keinen unsicheren Zustand gehen dürfen.

Bei einer Variante der Erfindung, bei welcher auf der Recheneinheit (=CPU) ein Betriebssystem abläuft, stellt ein Dispatcher dieses Betriebssystem sicher, dass der Speicherschutz immer errichtet wird, bevor eine nicht-sicherheits-relevante Schedule-Entscheidung getroffen wird, und der Speicherschutz der vom nicht-sicherheits-relevanten Bereich getrennten Bereiche des Speichers nur freigegeben wird, wenn (genau dann, wenn) die Schedule-Entscheidung zur Aktivierung einer sicherheits-relevanten Komponenten getroffen wurde.

Grundsätzlich ist von Vorteil, wenn nach Aufruf einer nicht-sicherheits-relevanten Softwarekomponente von der sicherheits-relevanten Funktion ein Lebenssignal an das Überwachungsmodul gesendet wird.

Weiters kann es von Vorteil sein, wenn vor und nach dem Aufruf einer unkritischen Softwarekomponente ein Zeitstempel an das Überwachungsmodul gesendet wird.

Besonders günstig ist es, wenn verteilt an mehreren für den Ablauf der sicherheits-relevanten Funktion wichtigen Stellen ("zentrale" Stellen) der sicherheits-relevanten Softwarekomponenten ein Lebenssignal an das Überwachungsmodul gesendet wird, sodass das Überwachungsmodul auch den funktionalen Ablauf der sicherheits-relevanten Softwarekomponenten prüfen kann.

In diesem Fall wird nicht ein einfaches Alive-Signal verwendet, sondern über Prüfsummen oder ähnliches wird auch die Reihenfolge des Ablaufes mehrerer Prüfpunkte überwacht. Man kann damit nicht nur sehen, dass die sicherheits-relevante Funktion läuft, sondern auch, in welcher Reihenfolge bestimmte kritische Punkte in der Funktion angefahren wurden

Schließlich ist es noch besonders günstig, wenn das Überwachungsmodul nach fehlendem Lebenssignal und/oder Zeitstempel das (Teil-)-System in einen sicheren Zustand überführt.

Im Folgenden ist die Erfindung an Hand der Zeichnung näher erläutert. In dieser zeigt
Fig. 1 eine Segmentierung des Arbeitsspeichers der Recheneinheit (CPU), auf welcher eine unkritische Funktion und eine sicherheits-relevante Funktion ausgeführt werden,
Fig. 2 den Pseudo-Code einer Prüf-/Schutzfunktion,
Fig. 3 den Ablauf einer unabhängigen Prüfung von sicherheits-relevanten Funktionen, und
Fig. 4 eine Pseudo-Code Speicherschutz-Aktivierung im Dispatcher eines Betriebssystems.

Die Erfindung beruht auf der Kombination mehrere Merkmale und Verfahren:
1. Realisierung eines Speicherschutzes des Speichers der CPU, um fehlgeleitete Speicherzugriffe von unkritischen Funktionen zu blockieren (erkennen)
2. Verwendung einer Prüfinstanz in einer unabhängigen Einheit, welche als Überwachungsmodul fungiert, um einen fehlerhaften Ablauf einer sicherheits-relevanten Funktion zu erkennen.

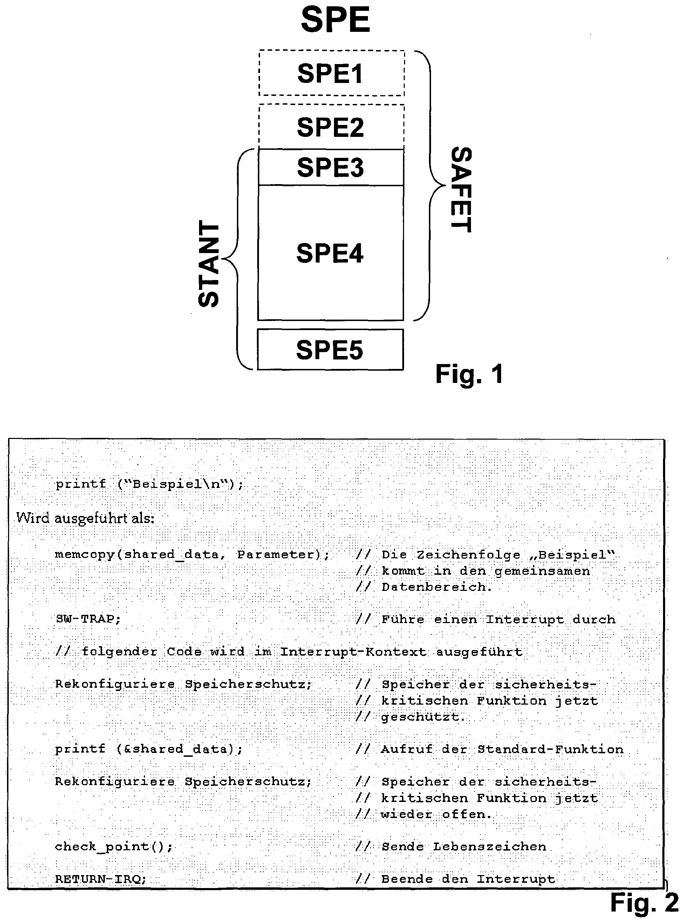

Das Verfahren benutzt diese zwei Techniken, um eine zuverlässige Überwachung von sicherheits-relevanten Funktionen zu erreichen. Dabei wird der Arbeitsspeicher SPE der CPU des Steuergerätes entsprechend Figur 1 segmentiert.

Die sicherheits-relevanten Funktionen SAFET können den gesamten Arbeitsspeicher SPE (oder wesentliche Bereiche SPE1 - SPE4 des Speichers SPE) lesen und beschreiben, während die unkritischen Funktionen STANT nur einen Teil SPE3 - SPE5 des Arbeitsspeichers SPE lesen und beschreiben können. Ein Teil SPE3 des Speichers SPE, der dem unkritischen Bereich zugeordnet ist, wird als Austauschbereich festgelegt. Hier können, wenn nötig, Daten zwischen sicherheits-relevanten und unkritischen Funktionen ausgetauscht werden.

Die Segmentierung des Speichers SPE muss dabei so erfolgen, dass die sicherheits-relevanten Funktionen ihren eigenen Stack- und Heap-Bereich SPE1 haben. Ein direkter Aufruf von Funktionen zwischen den Bereichen ist daher nicht möglich.

Es kann möglich sein, dass sicherheits-relevante Funktionen auf den Stack/Heap Bereich SPE5 der Standard-Funktionen Zugriff haben (nicht dargestellt), wobei dies in der Regel aber eher selten benötigt werden wird, wichtig ist aber, dass sicher gestellt ist, dass Standard Funktionen auf den Stack/Heap SPE1 der sicherheits-relevanten Funktionen (und auch auf die Variablen) nicht zugreifen können.

Speichersegmentierung allein reicht zum Schutz der sicherheits-relevanten Funktionen jedoch nicht aus. Es muss weiters sichergestellt werden, dass die unkritischen Funktionen nicht durch einen Fehler die CPU blockieren und damit verhindern, dass die sicherheits-relevanten Funktionen rechtzeitig reagieren können. Das erfindungsgemäße Verfahren verhindert zwar eine Blockade nicht, kann sie aber erkennen. Dabei wird bei jedem Umschalten zwischen sicherheits-relevanten und unkritischen (Standard) Funktionen ein Software-Prüfpunkt (SW-Prüfpunkt) durchlaufen.

Der Pseudo-Code in Figur 2 (hier ist ein Beispiel für den Aufruf einer Standardfunktion durch eine sicherheits-relevante Funktion beschrieben) legt den Kern des erfindungsgemäßen Verfahrens offen, nämlich die Prüf-/Schutzfunktion, mit der sowohl Arbeitsspeicherzugriffe als auch Laufzeitverhalten der unkritischen Funktionen geprüft werden.

Die Initialisierung der CPU erfolgt immer durch eine sicherheits-relevante Funktion, die dann von Anfang an die Kontrolle über die CPU hat. Jedes Mal, wenn eine unkritische Funktion ablaufen soll, wird der Schutz der sicherheits-relevanten Funktion(en) auf zwei Seiten hochgezogen: (1) Die Rekonfiguration des Speicherschutzes erreicht den Schutz der Daten der sicherheits-relevanten Funktion. Es werden Einstellungen an speziellen Modulen der CPU vorgenommen, sodass die Zugriffe nur mehr auf einen eingeschränkten Bereich des Arbeitsspeichers zulässig sind. Parameter, die ausgetauscht werden müssen, werden zunächst in einen Austauschbereich kopiert. Sollte die Standardfunktion auch Daten zurückliefern, würde ein analoger Mechanismus in die andere Richtung (von unkritischer zur sicherheits-relevanten Funktion) durchgeführt werden (nicht im Pseudocode gezeigt). (2) Der SW-Prüfpunkt ("check_point" im Pseudocode genannt) stellt sicher, dass ein Hängenbleiben der Standardfunktion erkannt wird. Es wird ein Lebenszeichen (Alive Signal) gesendet, welches außerhalb der CPU überwacht wird (siehe weiter unten).

Der in Figur 2 gezeigte Pseudocode muss für jeden Aufruf einer Standardfunktion im sicherheitsrelevanten Kontext erzeugt werden. Hierzu können bekannte Makro- bzw. Codegenerierungs-Techniken verwendet werden, sodass dieser Code nicht manuell geschrieben werden muss.

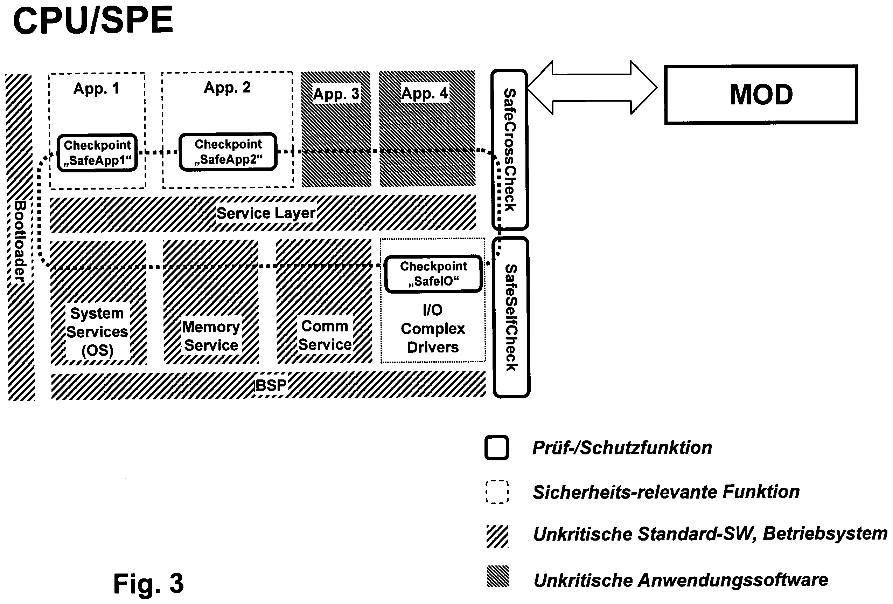

Um den Fall zu erkennen, dass eine unkritische Funktion fehlerhafterweise die CPU länger beansprucht als erlaubt (also blockiert), müssen die Lebenszeichen der sicherheits-relevanten Funktion, welche die Prüf-/Schutzfunktion sendet, unabhängig überwacht werden. Dazu kann z.B. ein Überwachungsmodul außerhalb der CPU verwendet werden. Figur 3 zeigt einen solchen einen Aufbau: Die Lebenszeichen-Signale werden gesammelt (siehe Modul SafeCrossCheck in Figur 3) und über eine I/O-Leitung an das Überwachungsmodul MOD übertragen. Das Überwachungsmodul MOD "lebt unabhängig" von der CPU, auf welcher die sicherheits-relevanten Funktionen laufen, ist daher nicht von Fehlern oder Blockaden der CPU betroffen, und kann solcherart erkennen, wenn eine sicherheits-relevante Funktion nicht mehr korrekt läuft.

Erhält die Überwachungsfunktion das Lebenszeichen nicht rechtzeitig, so kann sie Maßnahmen einleiten, um das System in einen sicheren Zustand überzuführen. Zum Beispiel wird ein Subsystem wie etwa ein Motor oder ein Steuergerät abgeschaltet oder eine mechanische Sperre/ein mechanisches "backup-System" aktiviert (z.B. um eine starre Verbindung zwischen Lenkrad und Rädern herbeizuführen).

Zusammengefasst unterscheidet sich das beschriebene Verfahren von den Lösungen nach dem Stand der Technik dadurch, dass
∘ Das Verfahren "optimistisch" ist. Es versucht nicht, eine harte Trennung von sicherheits-relevanten und unkritischen Funktionen zu erzwingen. Übergriffe der unkritischen Funktionen in den sicherheits-relevanten Bereich werden aber zuverlässig erkannt.
∘ Es ist leichtgewichtig, verbraucht kaum Ressourcen.
∘ Ein zertifiziertes Betriebssystem ist nicht notwendig. Das Verfahren kann in Systeme ohne Betriebssystem genauso eingesetzt werden, wie in Systemen mit Standard-Betriebssystem, welches dann wie eine unkritische Funktion behandelt wird.
∘ Eine Anpassung der unkritischen Funktionen an das Verfahren ist nicht notwendig. Die unkritische Software kann unverändert integriert werden. Die API ("Application Programming Interface") zu den unkritischen Funktionen kann erhalten bleiben.

### Varianten der Erfindung

### (1) Zeitüberwachung der unkritischen Funktionen:

Die Prüf-/Schutzfunktion kann auch dazu verwendet werden, die Zeitdauer der unkritischen Funktionen mitzuschreiben. Dazu wird vor dem Aufruf der unkritischen Funktion ein Zeitstempel gespeichert. Nach dem Aufruf kann somit die Laufzeit der unkritischen Funktion gemessen werden. Diese Laufzeit wird an das Überwachungsmodul übertragen. Das Überschreiten einer gewissen Grenze an Laufzeitverbrauch der unkritischen Funktionen wird als Fehler gewertet.

### (2) Weitergehende Prüfung der sicherheits-relevanten Funktionen:

Das beschriebene Verfahren kann dahingehend erweitert werden, dass komplexe Überprüfungen der sicherheits-relevanten Funktionen erfolgen. So kann ein bestimmter Pfad in der sicherheits-relevanten Funktion unabhängig verfolgt werden, in dem in der Prüf-/Stützfunktion eine bestimmte Reihenfolge der Aufrufe mit protokolliert wird.

### (3) Verwendung mit einem Betriebssystem:

Sollen sicherheits-relevante Funktionen in einem System mit Standard-Betriebssystem, welches selbst nicht den erforderlichen Sicherheitsstandard erfüllt, ausgeführt werden, dann ist dies mit dem erfindungsgemäßen Verfahren ebenfalls möglich. Folgende sicherheits-relevante Funktionen müssen dabei in das Betriebssystem integriert werden, damit bei jedem Kontextwechsel die Regeln des Verfahrens beachtet werden:
∘ Aktivierung des Speicherschutzes vor der Initialisierung der Tasks, die auf der CPU zur Ausführung gelangen sollen (Aktivierung des Speicherschutzes in einer frühen Initialisierungsphase der Software)
∘ Korrekte Modifikation des Speicherschutzes bei jedem Task-Switch
∘ Zuverlässige Modifikation des Speicherschutzes durch Interrupts

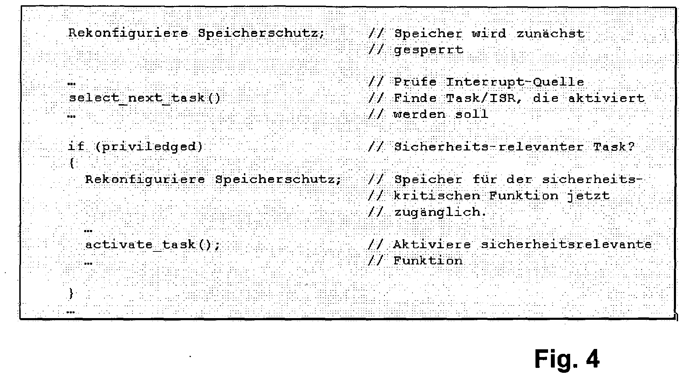

Der Pseudo-Code in Figur 4 zeigt die notwendige Erweiterung des Dispatchers. Der Dispatcher beginnt mit einem Interrupt, der in Figur 4 gezeugte Code ist in der Interrupt-Service-Routine enthalten.

Die in Variante (1) beschriebene Möglichkeit, unkritische Funktionen zeitlich zu überwachen, ist für das Betriebssystem ebenso möglich. Der Zeitzähler muss dann zusätzlich in allen oben beschriebenen Kontextwechseln nachgezogen werden.

### (4) Verschiedene Klassen von Speichersegmenten

Aus Gründen der Einfachheit wurde bei der Beschreibung des Verfahrens immer nur von zwei Speicherschutzklassen gesprochen:
- Speicher voll geöffnet für sicherheits-relevante Funktion
- Sicherheits-relevante Speicherbereiche voll geschützt.

Das Verfahren kann aber auch in Systemen verwendet werden, die eine größere Anzahl von Speicherschutzklassen verwenden. Verschiedene sicherheits-relevante Funktionen können verwaltet werden, wobei jede für sich nur auf den eigenen Speicherbereich zugreifen kann, nicht jedoch auf die Bereiche anderer sicherheits-relevanter Funktionen. Auch innerhalb der unkritischen Funktionen können ebenfalls unterschiedliche Speicherbereiche definiert werden. Für das Verfahren muss nur eine Bedingung erfüllt werden: Der private Speicherbereich (RAM, ROM, Stack, Heap) einer sicherheits-relevanten Funktion muss vor dem Zugriff durch eine unkritische Funktion geschützt sein.

Das erfindungsgemäße Verfahren ermöglicht es, sicherheits-relevante Software-Funktionen in einem Computer zusammen mit Standard-Funktionen bzw. -Betriebssystemen laufen zu lassen. Sicherheits-relevante und unkritische Funktionen laufen in getrenntem Kontext (mit eigenem Stack/Heap und mit eigenen Speichersegmenten) ab. Das Umschalten zwischen sicherheits-relevanten Funktionen und unkritischen Funktionen wird verwendet, um nicht nur den Speicherschutz zu (de-)aktivieren. An derselben Stelle werden auch Lebenszeichen (Alive-Signale) abgesetzt, die einem Überwachungsmodul erlauben, das Steuergerät unabhängig zu beobachten und bei Fehlern abzuschalten.

Das Verfahren zeichnet sich durch Leichtgewichtigkeit und breite Einsatzmöglichkeiten aus. Lediglich Hardware-unterstützer Speicherschutz und ein unabhängig laufendes Überwachungsmodul sind notwendig. An die verwendete Standard-Software werden keine Anforderungen gestellt, sie kann weitgehend unverändert verwendet werden. Adaptionen sind lediglich an wenigen kritischen Stellen in betriebssystemnahen Funktionen beim Kontextwechsel notwendig.

Das erfindungsgemäße Verfahren eignet sich insbesondere zum Einsatz auf Computern in sicherheitskritischen Bereichen - embedded oder als Host.

## Patentansprüche

1. Verfahren zum Ausführen von sicherheits-relevanten und nicht-sicherheits-relevanten Softwarekomponenten (SAFET, STANT) auf einer Hardwareplattform, wobei die Hardwareplattform eine Recheneinheit (CPU) und zumindest einen Speicher (SPE) umfasst und wobei die zumindest eine nicht-sicherheits-relevante Softwarekomponente (STANT) zusammen mit der zumindest einen sicherheits-relevanten Softwarekomponente (SAFET) auf dieser einen Recheneinheit (CPU) ausgeführt werden, und wobei die Hardwareplattform eine Überwachungskomponente (Überwachungsmodul) (MOD) umfasst oder mit dieser verbunden ist, und wobei
die Hardwareplattform über Schreibschutzmechanismen für zumindest einen Teil (SPE1, SPE2) des zumindest einen Speichers (SPE) verfügt, und wobei
die sicherheits-relevante Softwarekomponente (SAFET) über vollen Schreibzugriff auf bestimmte Bereiche (SPE1 - SPE4) oder auf den gesamten Speicher (SPE) verfügt, oder
die sicherheits-relevante Softwarekomponente (SAFET) auf einen bestimmten Bereich des Speichers, welcher von einem für nicht-sicherheits-relevante Funktionen vorgesehenen Bereich des Speichers getrennt ist, Zugriff hat, und wobei
die sicherheits-relevante Softwarekomponente (SAFET) vor der Ausführung der nicht-sicherheits-relevanten Softwarekomponente (STANT) einen Speicherschutz gegen einen Zugriff einer nicht-sicherheits-relevanten Funktion (STANT) auf zumindest einen Bereich (SPE1, SPE2) des Speichers der sicherheits-relevanten Funktion (SAFET) errichtet,
sodass die nicht-sicherheits-relevante Softwarekomponente (STANT) nur in eingeschränkten Bereichen (SPE3, SPE4, SPE5) des Speichers (SPE) über Schreibzugriff verfügt und insbesondere über keinen der für sicherheits-relevante Komponenten abgetrennten Bereiche (SPE1, SPE2) des Speichers (SPE) Zugriff hat,
und wobei nach der Rückkehr aus der nicht-sicherheits-relevanten Komponente (STANT) der Speicherschutz wieder heruntergefahren wird,
und wobei die Überwachungskomponente (MOD) die sicherheits-relevante Funktion auf ihren ordnungsgemäßen Ablauf hin überwacht,
**dadurch gekennzeichnet, dass**
die Überwachunsgskomponente unabhängig von der Recheneinheit (CPU) der Hardwareplattform arbeitet.

2. Verfahren nach Anspruch 1, **dadurch gekennzeichnet, dass** auf der Recheneinheit (CPU) ein Betriebssystem abläuft und ein Dispatcher dieses Betriebssystem sicherstellt, dass der Speicherschutz immer errichtet wird, bevor eine nicht-sicherheits-relevante Schedule-Entscheidung getroffen wird, und der Speicherschutz der vom nicht-sicherheits-relevanten Bereich getrennten Bereiche des Speichers nur freigegeben wird, wenn die Schedule-Entscheidung zur Aktivierung einer sicherheits-relevanten Komponenten getroffen wurde.

3. Verfahren nach Anspruch 1 oder 2, **dadurch gekennzeichnet, dass** nach Aufruf einer nicht-sicherheits-relevanten Softwarekomponente (STANT) von der sicherheits-relevanten Funktion ein Lebenssignal an die Überwachungskomponente (MOD) gesendet wird.

4. Verfahren nach einem der Ansprüche 1 bis 3, **dadurch gekennzeichnet, dass** vor und nach dem Aufruf einer unkritischen Softwarekomponente (STANT) ein Zeitstempel an die Überwachungskomponente (MOD) gesendet wird.

5. Verfahren nach einem der Ansprüche 1 bis 4, **dadurch gekennzeichnet, dass** an zentralen Stellen der sicherheits-relevanten Softwarekomponenten ein Lebenssignal an die Überwachungskomponente (MOD) gesendet wird, sodass die Überwachungskomponente (MOD) auch den funktionalen Ablauf der sicherheits-relevanten Softwarekomponenten prüfen kann.

6. Verfahren nach einem der Ansprüche 1 bis 5, **dadurch gekennzeichnet, dass** die Überwachungskomponente (MOD) nach fehlendem Lebenssignal und/oder Zeitstempel das (Teil-)-System in einen sicheren Zustand überführt.

7. Hardwareplattform zum Durchführen eines Verfahrens nach einem der Ansprüche 1 bis 6.

## Claims

1. A method for executing safety-relevant and non-safety-relevant software components (SAFET, STANT) on a hardware platform, wherein the hardware platform comprises a computer unit (CPU) and at least one memory (SPE) and wherein the at least one non-safety-relevant software component (STANT) along with the at least one safety-relevant software component (SAFET) are executed on this one computer unit (CPU) and wherein the hardware platform comprises a monitoring component (monitoring module) (MOD) or is connected thereto and wherein the hardware platform has read-only mechanisms for at least part (SPE1, SPE2) of the at least one memory (SPE) and wherein
the safety-relevant software component (SAFET) has full write access to certain regions (SPE1-SPE4) or to the entire memory (SPE) or
the safety-relevant software component (SAFET) has access to a particular region of the memory which is separate from a region of the memory provided for non-safety-relevant function, and wherein
prior to execution of the non-safety-relevant software component (STANT) the safety-relevant safety component (SAFET) sets up memory protection
to prevent access of a non-safety-relevant function (STANT) to at least one region (SPE1, SPE2) of the memory of the safety-relevant function (SAFET),
so that the non-safety-relevant software component (STANT) only has writing access in limited regions (SPE3, SPE4, SPE5) of the memory (SPE) and, in particular, does not have access to any of the separated regions (SPE1, SPE2) of the memory (SPE) for safety-relevant components,
and wherein following the return from the non-safety-relevant component (STANT) the memory protection is scaled down again,
and wherein the monitoring component (MOD) monitors the safety-relevant function to ensure smooth running,
**characterized in that**
the monitoring component works independently of the computer unit (CPU) of the hardware platform.

2. The method according to claim 1, **characterized in that** an operating system runs on the computer unit (CPU) and a dispatcher of this operating system ensures that the memory protection is always set up before a non-safety-relevant schedule decision is made and the memory protection of the regions of the memory separated from the non-safety-relevant region is only released when the schedule decision to activate a safety-relevant component has been made.

3. The method according to claim 1 or 2, **characterized in that** after a non-safety-relevant software component (STANT) has been invoked, a live signal is sent to the monitoring component (MOD) by the safety-relevant function.

4. The method according to one of claims 1 to 3, **characterized in that** before and after a non-critical software component (STANT) has been invoked, a time stamp is sent to the monitoring component (MOD).

5. The method according to one of claims 1 to 4, **characterized in that** a live signal is sent to the monitoring component (MOD) at central points of the safety-relevant software components, so that the monitoring component (MOD) can also check the functional process of the safety-relevant software components.

6. The method according to one of claims 1 to 5, **characterized in that** if a live signal and/or time stamp is missing, the monitoring component (MOD) switches the (partial) system into a secure state.

7. A hardware platform for performing a method according to one of claims 1 to 6.

## Revendications

1. Procédé pour exécuter des composants logiciels liés (SAFET) et non liés à la sécurité (STANT) sur une plate-forme matérielle, la plate-forme matérielle comportant une unité de calcul (CPU) et au moins une mémoire (SPE), et ledit au moins un composant logiciel non lié à la sécurité (STANT) étant exécuté conjointement audit moins un composant logiciel lié à la sécurité (SAFET) sur ladite unité de calcul (CPU), et la plate-forme matérielle comportant un composant de surveillance (module de surveillance) (MOD) ou étant reliée à celui-ci, et
la plate-forme matérielle disposant de mécanismes de protection en écriture pour au moins une partie (SPE1, SPE2) de ladite au moins une mémoire (SPE), et
le composant logiciel lié à la sécurité (SAFET) disposant d'un accès en écriture complet à des zones définies (SPE1-SPE4) ou à toute la mémoire (SPE), ou
le composant logiciel lié à la sécurité (SAFET) ayant accès à une zone définie de la mémoire, laquelle est séparée d'une zone de la mémoire consacrée à des fonctions non liées à la sécurité, et
avant l'exécution du composant logiciel non lié à la sécurité (STANT), le composant logiciel lié à la sécurité (SAFET) établissant une protection de la mémoire contre un accès d'une fonction non liée à la sécurité (STANT) à au moins une zone (SPE1, SPE2) de la mémoire de la fonction liée à la sécurité (SAFET),
de telle sorte que le composant logiciel non lié à la sécurité (STANT) dispose d'un accès en écriture seulement dans des zones limitées (SPE3, SPE4, SPE5) de la mémoire (SPE) et, en particulier, n'a pas accès aux zones (SPE1, SPE2) de la mémoire (SPE) séparées pour des composants liés à la sécurité,
et, après la fin de l'accès aux composants non liés à la sécurité (STANT), la protection de la mémoire étant à nouveau supprimée,
et le composant de surveillance (MOD) surveillant le déroulement correct de la fonction liée à la sécurité,
**caractérisé par le fait que**
le composant de surveillance fonctionne indépendamment de l'unité de calcul (CPU) de la plate-forme matérielle.

2. Procédé selon la revendication 1, **caractérisé par le fait qu'**un système d'exploitation s'exécute sur l'unité de calcul (CPU) et un répartiteur de ce système d'exploitation assure que la protection de la mémoire est toujours activée, avant qu'une décision de programmation non liée à la sécurité ne soit prise, et la protection de la mémoire des zones de la mémoire séparées de la zone non liée à la sécurité est permise seulement lorsque la décision de programmation pour l'activation d'un composant lié à la sécurité a été prise.

3. Procédé selon l'une des revendications 1 ou 2, **caractérisé par le fait qu'**après récupération d'un composant logiciel non lié à la sécurité (STANT), un signal en vie est envoyé au composant de surveillance (MOD) par la fonction liée à la sécurité.

4. Procédé selon l'une des revendications 1 à 3, **caractérisé par le fait qu'**avant et après la récupération d'un composant logiciel non critique (STANT), un horodatage est envoyé au composant de surveillance (MOD).

5. Procédé selon l'une des revendications 1 à 4, **caractérisé par le fait qu'**un signal en vie est envoyé au composant de surveillance (MOD) à des emplacements centraux des composants logiciels liés à la sécurité de telle sorte que le composant de surveillance (MOD) puisse également vérifier la séquence fonctionnelle du composant logiciel lié à la sécurité.

6. Procédé selon l'une des revendications 1 à 5, **caractérisé par le fait que** le composant de surveillance (MOD) convertit le (sous-) système à un état sûr après une absence d'un signal en vie et/ou d'un horodatage.

7. Plate-forme matérielle pour la réalisation d'un procédé selon l'une des revendications 1 à 6.
